# EUROPEAN PATENT APPLICATION

(11) **EP 4 270 533 A1**
(43) Date of publication of application: **01.11.2023**
(21) Application number: 21910363.7
(22) Date of filing: 09.12.2021
(51) Int. Cl.: H01M 4/134, H01M 4/1395, H01M 4/38, H01M 4/62, H01M 10/052, H01M 10/0566, H01M 10/058

(54) **NEGATIVE ELECTRODE FOR LITHIUM ION BATTERIES, LITHIUM ION BATTERY, METHOD FOR PRODUCING NEGATIVE ELECTRODE FOR LITHIUM ION BATTERIES, AND METHOD FOR PRODUCING LITHIUM ION BATTERY**

(30) Priority: 25.12.2020 JP 2020216634
(71) Applicant: The Japan Steel Works, Ltd., Tokyo 141-0032 (JP)
(72) Inventor: ISHIGURO, Ryo, Tokyo 141-0032 (JP); NAKAMURA, Satoru, Tokyo 141-0032 (JP); KUKEN, Yusuke, Tokyo 141-0032 (JP); MORISHITA, Masanori, Yonezawa-city, Yamagata 9928510 (JP)
(74) Representative: Locas, Davide
(86) International application number: PCT/JP2021/045419
(87) International publication number: WO 2022/138214

(57) **Abstract**

a negative electrode for a lithium ion cell battery capable of increasing a cell battery capacity and improving cell battery characteristics such as cycle characteristics is provided. A negative electrode mixture layer 1M including a negative electrode active material, a binder, and hydrophobized cellulose is formed as described below. The negative electrode active material includes nano-Si, the binder is an organic solvent-based binder (polyimide or polyvinylidene fluoride), and the hydrophobized cellulose results from substitution of a part of hydrophilic groups of cellulose by a hydrophobic group. When the organic solvent-based binder is used as described above, reaction between water and Si can be prevented, and the electrode characteristics can be improved. In a general technique, the addition amount of the organic solvent-based binder needs to be increased because of use of the Nano-Si, and therefore, this decreases the cell battery capacity and the cycle characteristics (cell battery life). However, by addition of the hydrophobized CeNF, the cell battery capacity and the cycle characteristics (cell battery life) can be improved.

## Description

### TECHNICAL FIELD

The present invention relates to a negative electrode for a lithium ion cell battery, a lithium ion cell battery, a method of manufacturing a negative electrode for a lithium ion cell battery, and a method of manufacturing a lithium ion cell battery.

The field of application of a secondary cell battery has been evolved to electronic components to auto vehicles, large-scale power storage systems and others. Particularly, attention has been paid to lithium ion cell batteries (secondary cell batteries) each being allowed to be downsized and lightweight and having a high energy density.

A negative electrode of the lithium ion cell battery is made of a current collector and a negative electrode mixture layer disposed on the current collector, and the negative electrode mixture layer contains a binder and others in addition to a negative electrode material.

For example, a Patent Document 1 discloses a non-water-based binder in an electrode for a lithium ion cell battery made of a complex compound of a cellulose nanofiber and a thermoplastic fluorine-based resin, the binder being cellulose in which the cellulose nanofiber has a fiber diameter that is equal to or larger than 0.002 µm and equal to or smaller than 1 um, a fiber length that is equal to or larger than 0.5 um and equal to or smaller than 10 mm, and an aspect ratio (fiber length of the cellulose nanofiber/fiber diameter of the cellulose nanofiber) that is equal to or larger than 2 and equal to or smaller than 100000.

### RELATED ART DOCUMENT

### PATENT DOCUMENT

Patent Document 1: International Patent Publication WO/2019/064583

### SUMMARY OF THE INVENTION

### PROBLEMS TO BE SOLVED BY THE INVENTION

For negative electrodes of lithium ion batteries, various materials have been studied to achieve a higher capacity. Particularly, Si (silicon) has a higher theoretical capacity than that of graphite, and has a potential as a negative electrode active material.

However, there is a problem that the volume of Si expands because of the insertion of lithium, and the expansion and shrinkage of the negative electrode active material is repeated by the repetition of the charge and discharge of a cell battery, and therefore, Si (particles) are easily peeled off from an electrode to cause low cycle characteristics (shorter cell battery life).

For the problem, reducing the influence of the volume expansion by nanosizing (micronizing) Si has been studied. On the other hand, a negative electrode is formed by adding a negative electrode active material and a binder to a solvent to make a slurry and applying the slurry onto a current collector. In this case, the nanosizing (micronizing) of Si leads to a larger surface area of Si nanoparticles (nano-Si) and a larger amount of the binder for binding among the nano-Si. Furthermore, Si reacts with water, and therefore, generates hydrogen gas when a water-based binder is used, and decreases cell battery characteristics (Problem 1). Furthermore, even when an organic binder is used, if an amount of the binder is large, cycle characteristics decrease (cell battery life is shortened) (Problem 2).

An object of one embodiment in the present specification is to provide a negative electrode and a lithium ion cell battery using the negative electrode capable of increasing a cell battery capacity and improving cell battery characteristics such as cycle characteristics (cell battery life). Another object of the embodiment is to provide a method of manufacturing a negative electrode and a method of manufacturing a lithium ion cell battery capable of increasing a cell battery capacity and improving cell battery characteristics such as cycle characteristics (cell battery life).

The above-described and other objects and novel characteristics of the present invention will be apparent from descriptions in the present specification and the accompanying drawings.

### MEANS FOR SOLVING THE PROBLEMS

A negative electrode for a lithium ion cell battery disclosed in the present application includes: a negative electrode mixture including a negative electrode active material, a binder, and hydrophobized cellulose, the negative electrode active material includes Si particles, the binder is an organic solvent-based binder, and the hydrophobized cellulose results from substitution of a part of hydrophilic groups of cellulose by a hydrophobic group.

A lithium ion cell battery disclosed in the present application includes: a negative electrode including a current collector and a negative electrode mixture layer formed on the current collector; a positive electrode; and an electrolytic solution. In the lithium ion cell battery, the negative electrode mixture layer includes a negative electrode active material, a binder, and hydrophobized cellulose, the negative electrode active material includes Si particles, the binder is an organic solvent-based binder, and the hydrophobized cellulose results from substitution of a part of hydrophilic groups of cellulose by a hydrophobic group.

A method of manufacturing a negative electrode for a lithium ion cell battery disclosed in the present application, includes: (a) a step of forming a slurry for the negative electrode by mixing a negative electrode active material, a binder, and hydrophobized cellulose; and (b) a step of applying the slurry for the negative electrode onto a current collector, the negative electrode active material includes Si particles, the binder is an organic solvent-based binder, and the hydrophobized cellulose results from substitution of a part of hydrophilic groups of cellulose by a hydrophobic group.

A method of manufacturing a lithium ion cell battery disclosed in the present application, includes: (a) a step of preparing a slurry for a negative electrode; (b) a step of applying the slurry for the negative electrode onto a current collector to form a negative electrode including the current collector and a negative electrode mixture layer; (c) a step of forming an electrode group in which the negative electrode and a positive electrode are stacked via a separator; (d) a step of housing the electrode group in a cell battery container; and (e) after the step (d), a step of introducing an electrolytic solution into the cell battery container, the step (a) is a step of forming the slurry for the negative electrode by mixing a negative electrode active material, a binder, and hydrophobized cellulose, the negative electrode active material includes Si particles, the binder is an organic solvent-based binder, and the hydrophobized cellulose results from substitution of a part of hydrophilic groups of cellulose by a hydrophobic group.

### EFFECTS OF THE INVENTION

Effects achieved by typical ones of the embodiments in the present specification will be briefly described as follows.

According to the negative electrode for the lithium ion cell battery disclosed in one embodiment in the present specification, a cell battery capacity can be increased, and cell battery characteristics such as cycle characteristics (cell battery life) can be improved.

According to the lithium ion cell battery disclosed in one embodiment in the present specification, a cell battery capacity can be increased, and cell battery characteristics such as cycle characteristics (cell battery life) can be improved.

According to the method of manufacturing the positive electrode for the lithium ion cell battery disclosed in one embodiment in the present specification, the negative electrode capable of increasing cell battery capacity and improving cell battery characteristics such as cycle characteristics (cell battery life) can be manufactured.

According to the method of manufacturing the lithium ion cell battery disclosed in one embodiment in the present specification, the lithium ion cell battery capable of increasing cell battery capacity and improving cell battery characteristics such as cycle characteristics (cell battery life) can be manufactured.

### BRIEF DESCRIPTIONS OF THE DRAWINGS

FIG. 1 is a diagram schematically illustrating a configuration of a positive electrode, a negative electrode, and a lithium ion cell battery using the positive electrode and the negative electrode according to a first embodiment.
FIG. 2 is a diagram schematically illustrating a configuration of a positive electrode, a negative electrode, and a lithium ion cell battery using the positive electrode and the negative electrode according to the first embodiment.
FIG. 3 is a diagram illustrating a step of preparing hydrophobized CeNF (cellulose nanofiber) dispersed in a solvent.
FIG. 4 is a diagram illustrating an example of a step of preparing a slurry for a negative electrode.
FIG. 5 is a schematic diagram illustrating a configuration of an apparatus of manufacturing the negative electrode according to the first embodiment.
FIG. 6 is a perspective diagram illustrating a state of coating with a slurry for a negative electrode in a case of using a slit die.
FIG. 7 is a diagram illustrating an example of the step of preparing a slurry for a negative electrode in a case of using a water-based binder.
FIG. 8 is a graph illustrating initial characteristics of a coin-type cell battery.
FIG. 9 is a graph illustrating initial cell battery characteristics in a case of using a water-based solvent.
FIG. 10 is a graph illustrating cycle characteristics of coin-type cell batteries (Samples 1, 2, 5, and 6).
FIG. 11 is a graph illustrating cycle characteristics of coin-type batteries that are different from one another in an addition amount of hydrophobized CeNF.
FIG. 12 is a graph illustrating cycle characteristics of a coin-type cell battery having a ratio to nano-Si of 8:2.
FIG. 13 is a cross-sectional perspective view illustrating a configuration of a cylindrical lithium ion cell battery.
FIG. 14 is a cross-sectional diagram illustrating a method of preparing a slurry for a negative electrode in a case of using an extruder.
FIG. 15 is a cross-sectional diagram illustrating a method of preparing a slurry for a positive electrode in a case of using an extruder.
FIG. 16 is a diagram illustrating a step of preparing hydrophobized CeNF dispersed in an organic solvent.

### DETAILED DESCRIPTION OF PREFERRED EMBODIMENTS

Hereinafter, embodiments will be described in detail with reference to examples and the drawings. Note that components having the same function are denoted by the same reference signs throughout all the drawings for describing the embodiments, and the repetitive description thereof will be omitted. Furthermore, in the following embodiments, when a range is expressed as A to B, the range indicates equal to or more than A and equal to or less than B, unless otherwise specified.

### (First Embodiment)

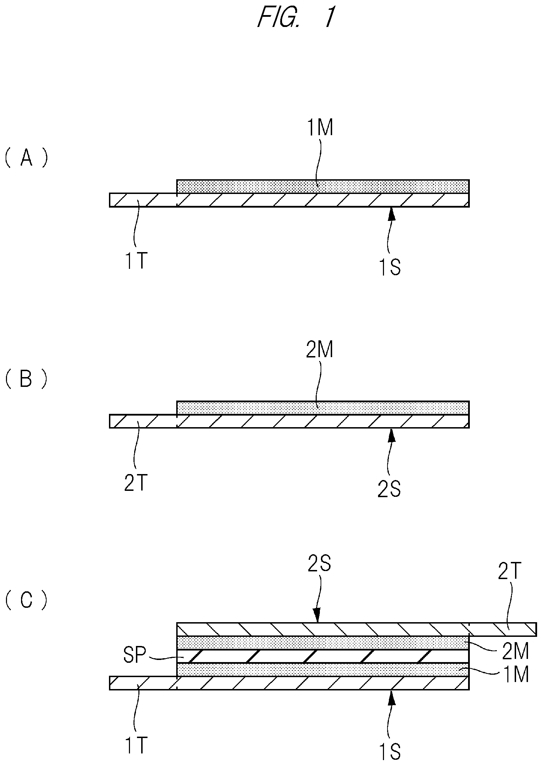

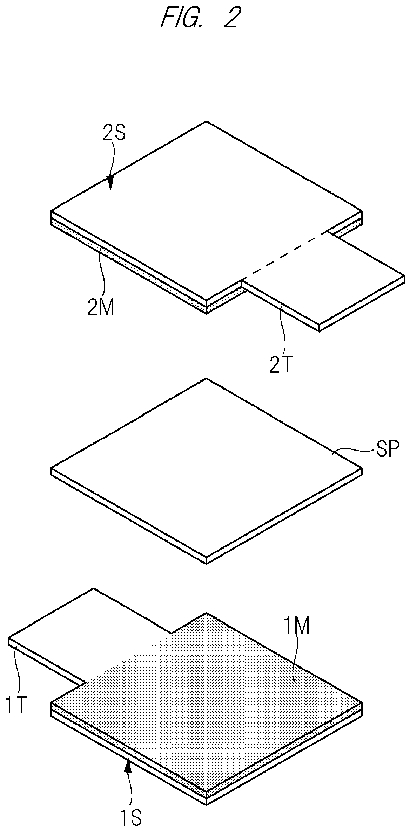

FIG. 1 and FIG. 2 are diagrams schematically illustrating configurations of a positive electrode, a negative electrode, and a lithium ion cell battery using the positive electrode and the negative electrode according to the present embodiment. FIG. 1(A) illustrates the configuration of the negative electrode, FIG. 1(B) illustrates the configuration of the positive electrode, and FIG. 1(C) illustrates the internal configuration of the lithium ion cell battery.

As illustrated in FIG. 1(A), the negative electrode is made of a current collector 1S and a negative electrode mixture layer 1M disposed on the current collector 1S. As illustrated in FIG. 1(B), the positive electrode is made of a current collector 2S and a positive electrode mixture layer 2M disposed on the current collector 2S. Furthermore, as illustrated in FIG. 1(C), the lithium ion cell battery includes the negative electrode, the positive electrode, and a separator interposed between the negative electrode and the positive electrode, and the negative electrode and the positive electrode face each other so that the negative electrode mixture layer 1M and the positive electrode mixture layer 2M are in contact with the separator SP (also see FIG. 2). Note that, as illustrated in FIG. 1(C), a part of the current collector 1S of the negative electrode serves as a negative electrode terminal 1T while a part of the current collector 2S of the positive electrode serves as a positive electrode terminal 2T. A stacked body (also referred to as an electrode group) of the negative electrode, the positive electrode, and the separator is housed together with an electrolytic solution in a cell battery container (for example, a pouch made of a laminated film or a cell battery can), and the cell battery container is sealed while the negative electrode terminal 1T and the positive electrode terminal 2T protrude out (are exposed out).

The negative electrode and the positive electrode are each formed by adding electrode materials such as an electrode active material and a binder to a solvent (such as an organic solvent or a water-based solvent) to make a slurry, applying the slurry onto a current collector and drying it.

Here, in the present embodiment, nano-Si is used as a negative electrode active material in the negative electrode mixture layer. A binder is used for the negative electrode mixture layer in order to bind the above-described negative electrode active material or others. A hydrophobized cellulose is used as an additive in the negative electrode mixture layer.

The use of the negative electrode mixture layer increases a cell battery capacity, and improves cell battery characteristics such as cycle characteristics (cell battery life). Particularly, even when nano-Si and an organic solvent-based binder are used, the cell battery capacity can be increased, and the cell battery characteristics such as cycle characteristics (cell battery life) can be improved.

Subsequently, the negative electrode, the positive electrode, the separator, and the electrolytic solution of the lithium ion cell battery according to the present embodiment will be sequentially described.

### [Negative Electrode]

As described above, the negative electrode (a negative electrode plate, a negative electrode sheet) includes the current collector and the negative electrode mixture layer disposed on the current collector. The negative electrode mixture layer is a layer disposed on the current collector and including at least the negative electrode active material. In the present embodiment, nano-Si is contained as the negative electrode active material. The negative electrode mixture layer further includes a binder to bind the negative electrode active material. The negative electrode mixture layer further includes hydrophobized cellulose as an additive. Note that the negative electrode mixture layer may further include a thickener, a dispersant, a conductive agent (also referred to as a conductive aid) and others as other additives.

A metal thin film can be used as the current collector for the negative electrode. As the metal material, copper, lithium (Li), stainless steel, or the like can be used. Furthermore, such a metal material, a surface of which is plated with nickel or the like, may be used.

### (Negative Electrode Active Material)

Nano-Si that is a Si (silicon)-based material can be used as the negative electrode active material. The nano-Si is made of nanometer-order Si particles. Note that SiO (SiOx) may be formed in the surface of Si, or carbon-coated nano-Si or the like may be used. A thickness of a coating layer is preferably approximately 1 um to 10 nm.

Although there is no limitation on a method of micronizing (nanosizing) Si, Si fine particles can be obtained by, for example, vaporizing a Si compound and then cooling it. The average particle diameter (median diameter, D50) of the nano-Si is preferably 10 nm to 500 nm, and more preferably 20 nm to 200 nm. Generally, in the case of Si, the smaller the particle size is, the higher the electrode capacity is. However, on the other hand, the surface area of Si increases, and therefore, the amount of the binder needs to be increased in order to prevent Si from being peeled off due to the expansion and shrinkage of Si during charge and discharge. Therefore, the particle size is preferably selected in accordance with the cell battery capacity to be manufactured. The average particle diameter (median size, D50) of the nano-Si can be measured by, for example, a laser diffraction/scattering particle size distribution measurement method. Furthermore, the Si particles can be observed by using an electron microscope such as SEM or TEM or an atomic force microscope such as AFM or SPM. Also from this observation, the particle diameter can be measured.

As the negative electrode active material, the following other materials may be used together with the nano-Si. Carbon-based materials such as black lead (graphite), hard carbon (non-graphitizable carbon), and soft carbon (graphitizable carbon) can be used as the negative electrode active material that can be used together with the nano-Si. Alternatively, lithium titanate (Li₄Ti₅O₁₂) or others may be used. From the viewpoint of improving the cycle characteristics, the carbon-based material, particularly graphite is preferably used.

As described above, when the nano-Si is used as the negative electrode active material, the cell battery capacity does not eventually increase so much, despite the capacity should theoretically increase, and the cycle characteristics tend to decrease. It is considered that, as described above, this is because this is affected by the increase in the amount of the binder due to the increase in the surface area of the particles based on nanosizing of the particles for reducing the influence of volume expansion of Si. However, in the present embodiment, when hydrophobized CeNF is added, the decrease in the cell battery capacity can be suppressed even in the increase in the amount of the binder, and the effect of the increase in the original cell battery capacity of Si can be achieved. It is considered that this is because composition of the hydrophobized CeNF and the binder suppresses the volume expansion of Si. Furthermore, it is considered that the suppression of the volume expansion suppresses the peeling off of the negative electrode active material, which results in the improvement of the cycle characteristics (cell battery life).

### (Binder)

The binder has the functions of, for example, binding the negative electrode materials such as an electrode active material in the negative electrode mixture layer, binding the negative electrode materials and the current collector and others. The binder for an electrode mixture layer can be classified into a water-based binder and an organic solvent-based binder.

For example, styrene-butadiene copolymer rubber (SBR), polyvinyl alcohols, polyacrylic acids, carboxymethyl cellulose and others are exemplified as the water-based binder, and the water-based binder is used while being dispersed in a water-based solvent (for example, water).

For example, polyvinylidene fluoride (PVdF), polyimide (PI) and others are exemplified as the organic solvent-based binder, and the organic solvent-based binder is used while being added to an organic solvent. Among them, polyvinylidene fluoride (PVdF) is called a soluble binder, and is used while being dissolved in an organic solvent such as N-methyl-2-pyrrolidone (NMP). Polyimide (PI) is called a reactive binder, is used while a PI precursor is dissolved or dispersed in a solvent such as NMP, and is caused to make a crosslinking reaction owing to imidization (dehydration reaction and cyclization reaction) to provide tough PI when being heated.

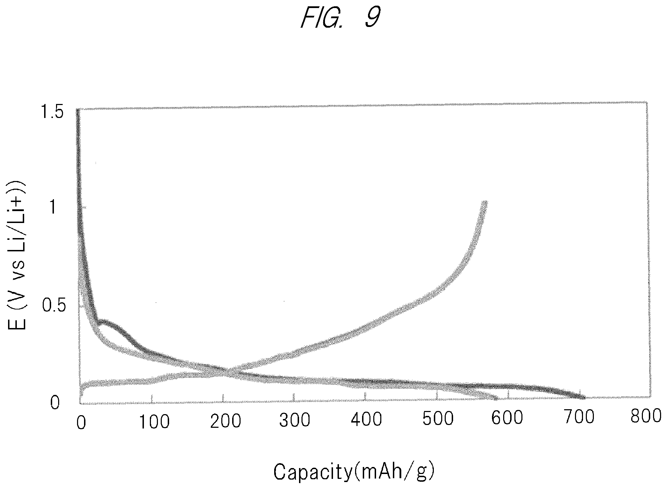

Here, in the present embodiment, the organic solvent-based binder is used. When the water-based binder is used as described later, hydrogen gas is generated by reaction between water and Si, and thus, the electrode characteristics decreases (see FIG. 9). Thus, when the organic solvent-based binder is used, the reaction between water and Si can be prevented, and thus, the electrode characteristics can be improved.

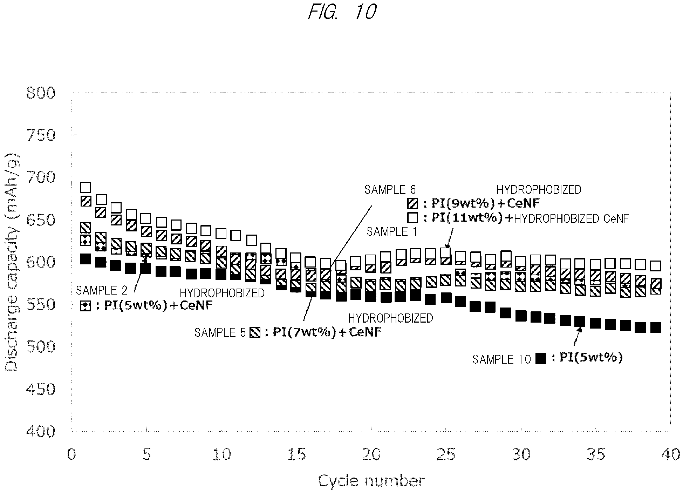

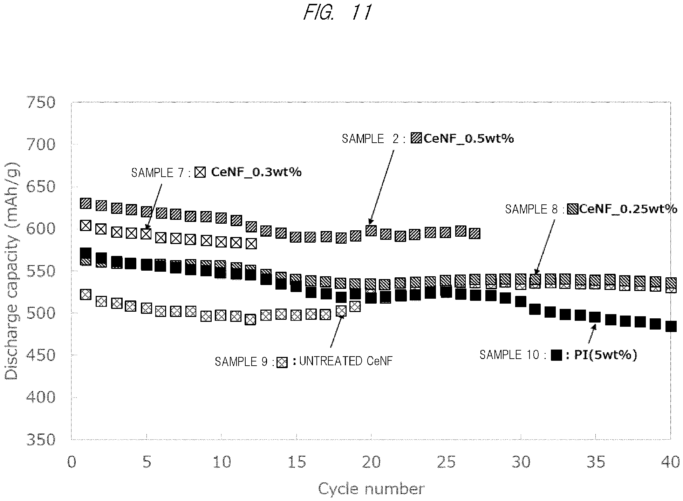

Generally, the use of nano-Si needs to increase the addition amount of the organic solvent-based binder, and thus, the cell battery capacity and the cycle characteristics (cell battery life) decrease. On the other hand, in the present embodiment, since the hydrophobized CeNF is added as the additive, the cell battery capacity and the cycle characteristics (cell battery life) can be improved even in the case of use of the organic solvent-based binder (see FIGs. 10 and 11 and others).

### (Hydrophobized Cellulose)

The cellulose (Cell-OH) is a carbohydrate expressed by (C₁₂H₂₀O₁₀)ₙ. For example, this is expressed by the following chemical formula (Chemical Formula 1). In this chemical formula, the term "n" representing the average number of repeat units is a number that is equal to or larger than 1, and is preferably 10 to 10000, more preferably 50 to 2000.

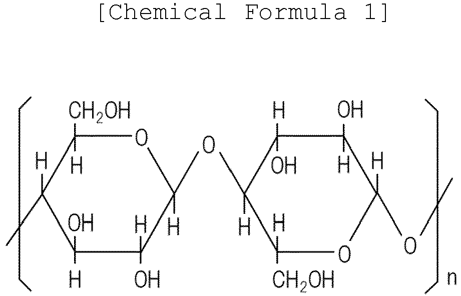

Incidentally, as shown in the following Chemical Formula 2, a cellulose in which a part of a plurality of hydroxyl groups of the carbohydrate expressed by (C₁₂H₂₀O₁₀)ₙ is substituted with a group having a hydroxyl group (for example, "-R-OH" such as - CH₂OH ("R" represents a bivalent hydrocarbon group)) may be used.

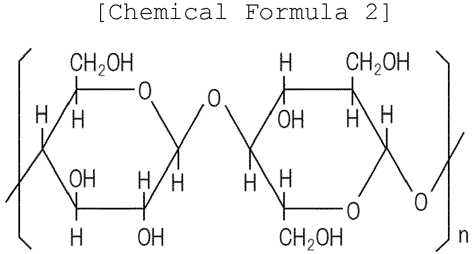

As seen from the Chemical Formulas 1 and 2, the cellulose has the hydroxyl group (hydrophilic group). The hydrophobization (lipophilization) treatment is performed to this hydroxyl group (hydrophilic group) by using a hydrophobizing agent (such as carboxylic acid-based compound). In other words, the hydroxyl group (-OH) moiety of the cellulose is substituted with the hydrophobic group. More specifically, (one or) some of the hydroxyl groups of the cellulose are esterified by a carboxylic acid-based compound (R-CO-OH). In other words, the hydroxyl group (-OH) moiety of the cellulose is changed to an ester bond (-O-CO-R, carboxylic group). Note that all hydroxyl groups of the cellulose are unnecessary to be substituted with the hydrophobic groups, and one or some of the hydroxyl groups may be substituted. An example of the esterifying (hydrophobizing) reaction of the cellulose is expressed by the following reaction formula.

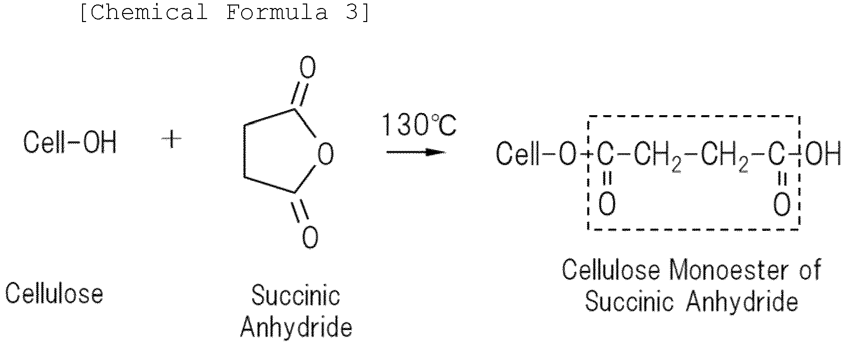

The hydrophobizing agent is not particularly limited if the hydrophobizing agent has a composition capable of providing the hydrophobic group to the hydrophilic group of the cellulose. For example, the carboxylic acid-based compound can be used. Particularly, a compound having two or more carboxylic groups, an acid anhydride of the compound having two or more carboxylic groups or others is preferably used. Among the compounds each having two or more carboxylic groups, a compound (dicarboxylic compound) having two carboxylic groups is preferably used.

As the compound having two carboxylic groups, dicarboxylic acid compounds such as propanedioic acid (malonic acid), butanedioic acid (succinic acid), pentanedioic acid (glutaric acid), hexanedioic acid (adipic acid), 2-methyl propanedioic acid, 2-methyl butanedioic acid, 2-methyl pentanedioic acid, 1, 2-cyclohexane dicarboxylic acid, 2-butenedioic acid (maleic acid, fumaric acid), 2-pentenedioic acid, 2, 4-hexadienedioic acid, 2-methyl-2-butenedioic acid, 2-methyl-2-pentenedioic acid, 2-methylidene butanedioic acid (itaconic acid), benzene-1, 2-dicarboylic acid (phthalic acid), benzene-1, 3-dicarboylic acid (isophthalic acid), benzene-1, 4-dicarboylic acid (terephthalic acid) and ethanedioic acid (oxalic acid) are exemplified. As the acid anhydride of the compound having two carboxylic groups, acid anhydrides of the dicarboxylic compounds or compounds containing a plurality of carboxylic groups such as maleic anhydride, succinic anhydride, phthalic anhydride, glutaric anhydride, adipic anhydride, itaconic anhydride, pyromellitic anhydride, 1, 2-cyclohexane dicarboxylic anhydride are exemplified. As derivatives of the acid anhydride of the compound having two carboxylic groups, materials that are obtained by substituting at least a part of hydrogen atoms of the acid anhydride of the compound having the carboxylic group such as dimethyl maleic anhydride, diethyl maleic anhydride and diphenyl maleic anhydride, with a substituent group (such as an alkyl group, a phenyl group or others), are exemplified. Among these materials, the maleic anhydride, the succinic anhydride or the phthalic anhydride is preferable because of being industrially readily applicable and easily gasified.

Further, a process for improving the hydrophilic property may be secondarily performed to the hydrophilic group of the cellulose by a hydrophobizing process (modification with a carboxylic acid-based compound) performed thereto, and then, addition of alkylene oxide thereto. Alternatively, two or more types of the hydrophobizing agent may be added.

The cellulose may be subjected to a fibrillating process to be miniaturized (nano-sized). The fibrillating process (miniaturizing process) includes a chemical process method, a mechanical process method and others. Combination of these methods may be used. By such a fibrillating process (miniaturizing process), the CeNF having a fiber length (L) that is equal to or larger than 3 nm and equal to or smaller than 10 um and an aspect ratio (length (L)/diameter (D)) that is equal to or larger than 0.005 and equal to or smaller than 10000 can be provided. Such a miniaturized cellulose fiber to be nano-sized as described above is referred to as the cellulose nanofiber (CeNF).

The miniaturization (nano-sizing) process for the cellulose as described above may be performed before or after the hydrophobization process.

### (Method of Preparing Hydrophobized CeNF dispersed in Solvent)

The hydrophobized CeNF is preferably used to be dispersed in solvent in order to avoid the gathering to increase dispersion in the slurry.

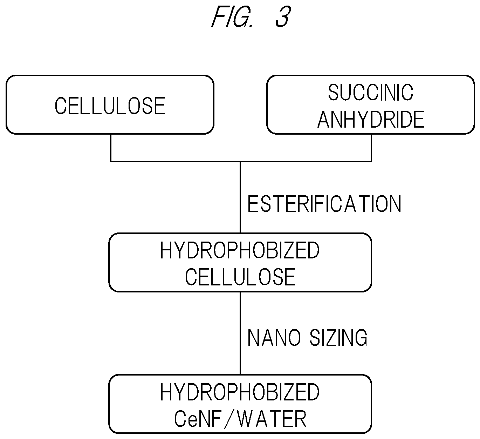

FIG. 3 is a diagram illustrating a step of preparing the hydrophobized CeNF dispersed in the solvent. For example, as illustrated in FIG. 3, the (solid such as powder) cellulose and the (solid such as tablet) succinic anhydride are mixed at 100°C or higher. These materials are mixed by, for example, a pressure kneader for 20 minutes at 125°C. Weights of the cellulose and the succinic anhydride are, for example, 90 wt% (weight%, mass%) and 10 wt%, respectively.

The esterification reaction is generated by the agitation under the heating state as described above to generate the hydrophobized cellulose. After this, the mixture is rinsed with acetone or others in order to remove the unreacted succinic anhydride.

Then, the generated hydrophobized cellulose is dispersed in a water-based solvent (such as water and/or alcohols, water (H₂O) in this case) to perform the fibrillating process (miniaturizing process, nano-sizing process). The cellulose is formed to be nano-sized by, for example, using a miniaturizing machine (STAR BURST) performing a process at 245 MPa and 10 Pass.

### (Step of Preparing Slurry for Negative Electrode)

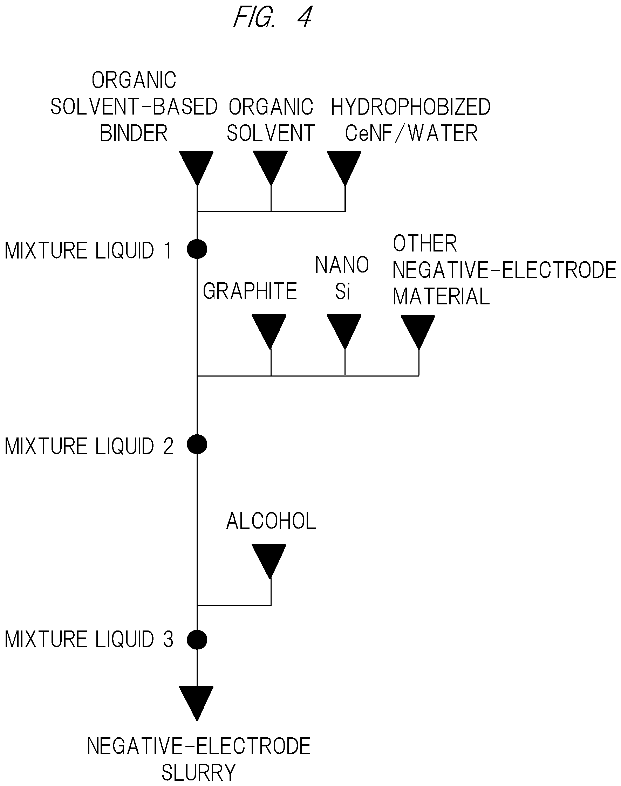

Next, the step of preparing the slurry for the negative electrode will be described. The slurry for the negative electrode is prepared by adding the negative electrode active material, the organic solvent-based binder, and the hydrophobized CeNF (dispersed in water) described above to an organic solvent. Note that, in addition to the above-described materials, other additives such as a conductive agent and a dispersant may be further added. FIG. 4 is a diagram illustrating an example of the step of preparing the slurry for the negative electrode. The example of the step of preparing the slurry for the negative electrode will be described with reference to FIG. 4.

First, the organic solvent-based binder, the organic solvent, and the hydrophobized CeNF (dispersed in water) are mixed to prepare a mixed solution 1. At this time, other additives such as a conductive agent and a dispersant may be further added. The mixed solution 1 is stirred (for example, stirred at 1000 rpm for approximately 1 minute). A high-speed stirrer (for example, Homodisper) can be used for the stirring.

Subsequently, the graphite and the nano-Si are added as the negative electrode active materials to the mixed solution 1, and furthermore, for example, CNT and acetylene black (AB) serving as the conductive agents are added thereto, and then, these materials are stirred to prepare a mixed solution 2. A high-speed stirrer (for example, Homodisper) is used for the stirring performed, for example, at 3000 rpm for approximately 30 minutes.

Subsequently, after alcohol is added to the mixed solution 2, these materials are stirred to prepare a mixed solution 3. A high-speed stirrer (for example, Homodisper) is used for the stirring performed, for example, at 3000 rpm for approximately 1 minute.

Thus, the slurry for the negative electrode can be provided. The viscosity of the resultantly-provided slurry for the negative electrode was 6200m Pas (at 35°C), and air bubbles as seen in a later-described slurry 4 for a negative electrode were not visually observed. Furthermore, coatability of the slurry for the negative electrode was good. For example, when the negative electrode mixture layer was formed by a later-described apparatus, no defect derived from the air bubbles and the like was observed in the layer. In terms of the coatability, the viscosity of the slurry for the negative electrode is preferably 3000 to 5000 mPas.

As described above, in the present embodiment, the use of the organic solvent-based binder reduces the air bubbles formed in the slurry for the negative electrode, and can improve the characteristics of the negative electrode mixture layer.

Note that not only the above-described AB and CNT but also Ketjen black, a carbon nano fiber, and the like can be used as the conductive agents serving as the other additives described above. As the dispersant, a surfactant can be used. As the other additives, not only the dispersant but also a thickener or the like may be used.

### (Step of Forming Negative Electrode)

The above-described slurry for the negative electrode is applied to a surface of the current collector (for example, steel foil) and is dried to form the negative electrode mixture layer. Thus, the negative electrode including the current collector (for example, steel foil) and the negative electrode mixture layer can be formed (see FIG. 1(A)).

Although there is no limitation on a method of applying the slurry for the negative electrode, for example, a die coater can be used. Then, by drying the coating layer, the negative electrode mixture layer can be formed on a surface of a base substance S. Thus, the negative electrode including the base substance (for example, steel foil serving as the current collector) S and the negative electrode mixture layer can be formed.

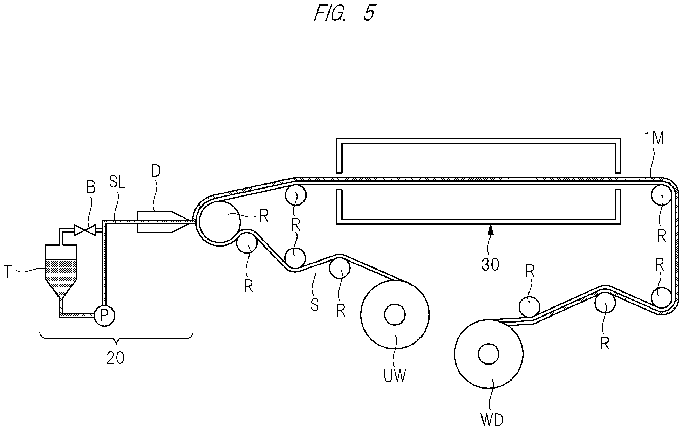

FIG. 5 is a schematic diagram illustrating a configuration of an apparatus of manufacturing the negative electrode according to the present embodiment. The manufacturing apparatus illustrated in FIG. 5 includes an unwinder (feeding-out unit) UW configured to feed the base substance (current collector) S and a winder (feeding-in unit) WD configured to reel up the base substance (current collector) S. The base substance (current collector) S is continuously arranged from the unwinder UW to the winder WD. When a negative electrode mixture layer (a coating layer of a slurry SL for a negative electrode) 1M is formed between the unwinder UW and the winder WD on a surface (a first surface) of the base substance S, the negative electrode is completed. By the manufacturing apparatus, the rolled (the rolled belt-shaped) base substance S can be continuously processed, and the negative electrode can be efficiently formed. In the present specification, note that occasionally the unwinder UW side is referred to as an upstream side while the winder WD side is referred to as a downstream side.

Specifically, at least one coater unit 20 and at least one dryer unit (drying furnace) 30 are disposed between the unwinder UW and the winder WD. The base substance S is processed in each process unit while being guided by a plurality of rolls (guide rolls) R, and the negative electrode mixture layer (the coating layer of the slurry SL for the negative electrode) 1M is formed on the surface of the base substance S. Hereinafter, detailed descriptions will be given.

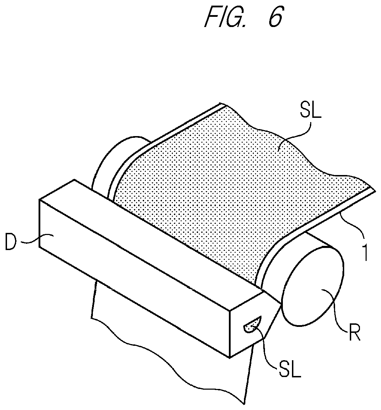

The base substance S unwound from the unwinder UW is guided by the plurality of rolls R, and is fed to the coater unit 20. The coater unit 20 includes a coating liquid tank T, a pump P, and a slit die D. The slurry SL for the negative electrode serving as the coating liquid is supplied from the coating liquid tank T to the slit die D via the pump P. Note that a valve B is provided between a supply pipe of the slurry SL for the negative electrode and the coating liquid tank T. FIG. 6 is a perspective diagram illustrating a state of applying the slurry for the negative electrode by using the slit die. As illustrated in FIG. 6, the slurry SL for the negative electrode is supplied from a manifold disposed inside the slit die D via a slit (a discharge unit) at the tip of the die, and is applied to the base substance S to form a coating layer (SL).

The base substance S including the coating layer (SL) formed thereon is guided by the rolls R, and is fed to the dryer unit 30. Into the dryer unit 30, heated air is introduced from a not-illustrated nozzle. The temperature of the heated air is controlled by a not-illustrated heating unit (such as a heater). The temperature of the dryer unit 30 is equal to or lower than 100°C, for example, is approximately 70°C. In the dryer unit 30, a liquid component of the coating layer (SL) is vaporized to form the negative electrode mixture layer 1M.

Thus, by the use of the slurry SL for the negative electrode, the negative electrode with high accuracy can be efficiently formed. Particularly, the slurry SL for the negative electrode has less air bubbles and good coatability. Therefore, even when the feed-in speed of the base substance S is equal to or higher than 10 m/min, a favorable negative electrode can be formed.

Note that a milling roller unit may be provided the downstream side of the dryer unit 30. The coating layer can be milled and rolled by, for example, bringing a stacked body of the base substance S and the coating layer to pass through a narrow gap between two rolls. The milling roller unit may be disposed between the coater unit 20 and the dryer unit 30.

In place of the die coater, a gravure coater may be used. The slurry SL for the negative electrode may be applied to both-side surfaces of the base substance S. In this case, the slurry SL for the negative electrode may be sequentially applied to the surfaces of the base substance S one by one, or the slurry SL for the negative electrode may be applied to the both-side surfaces of the base substance S during the process illustrated in FIG. 5.

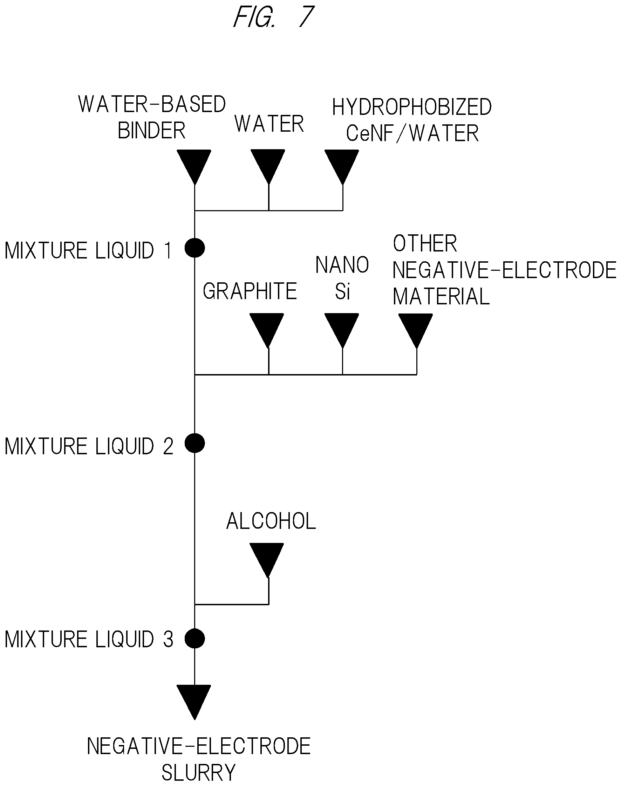

An example of the step of preparing the slurry for the negative electrode in the case of use of the water-based binder is illustrated in FIG. 7. As illustrated in FIG. 7, a mixed solution 1 is prepared by mixing the water-based binder and water. At this time, other additives such as a conductive agent and a dispersant may be further added. The mixed solution 1 is stirred (for example, stirred at 1000 rpm for approximately 1 minute). A high-speed stirrer (for example, Homodisper) can be used for the stirring.

Subsequently, graphite, the nano-Si, and other negative electrode active materials (for example, acetylene black (AB)) are added as the negative electrode active materials to the mixed solution 1, and then, these materials are stirred to prepare a mixed solution 2. A high-speed stirrer (for example, Homodisper) is used for the stirring performed at, for example, 1000 to 4000 rpm for approximately 30 minutes.

Subsequently, alcohol is added to the mixed solution 2, and then, these materials are stirred to prepare a mixed solution 3. A high-speed stirrer (for example, Homodisper) is used for the stirring performed at, for example, 1000 to 4000 rpm for approximately 1 minute.

### [Positive Electrode]

As described above, the positive electrode (positive electrode plate, positive electrode sheet) includes a current collector and a positive electrode mixture layer disposed on the current collector. The positive electrode mixture layer is a layer disposed on the current collector and including at least a positive electrode active material.

As the positive electrode active material, ternary lithium metal oxides, such as NCA (lithium nickel-cobalt-aluminum-based oxide, lithium nickel-cobalt-aluminum oxide (Li(Ni,Co,Al)O₂)) and NCM (lithium nickel-cobalt-manganese-based oxide, lithium nickel-cobalt-manganese oxide (Li(Ni,Co,Mn)O₂)) can be used. The positive electrode mixture layer further includes a binder for binding the above-described positive electrode active material. As the binder, plastic fluorine resin-based binder such as polyvinylidene fluoride (PVdF) can be used. As similar to the case of the negative electrode, the positive electrode mixture layer may further include a conductive agent, a thickener, dispersant, and the like.

As the current collector for the positive electrode, a metal thin film can be used. As a metal material, aluminum, stainless steel (SUS), or the like can be used. Alternatively, such a material, a surface of which is plated with nickel or the like, may be used. Note that, in the later-described examples, a half cell without the positive electrode (the counter electrode is Li metal) was evaluated.

### [Separator]

As the separator, resin such as polypropylene (PP), polyethylene (PE), and polyethylene terephthalate (PET), glass fiber, and nonwoven fabric can be used.

### [Electrolytic Solution]

The electrolytic solution is made of an electrolyte salt and an electrolyte solvent. As the electrolyte salt, a lithium salt can be used. Particularly, at least one selected from the group consisting of lithium hexafluorophosphate (LiPF₆), lithium perchlorate (LiClO₄), lithium tetrafluoroborate (LiBF₄), lithium trifluoromethanesulfonate (LiCF₃SO₄), lithium bis(trifluoromethanesulfonyl)imide (LiN(SO₂CF₃)₂), lithium bis (pentafluoroethanesulfonyl)imide (LiN(SO₂C₂F₅)₂), and lithium bis oxalate borate (LiBC₄O₈). As the electrolyte solvent, at least one selected from the group consisting of propylene carbonate (PC), ethylene carbonate (EC), dimethyl carbonate (DMC), diethyl carbonate (DEC), ethyl methyl carbonate (EMC), diphenyl carbonate, γ-butyrolactone (GBL), γ-valerolactone, methyl formate (MF), 2-methyltetrahydrofuran, 1,3-dioxolane, 4-methyl-1,3-dioxolane, dimethoxyethane (DME), 1,2-diethoxyethane, diethyl ether, sulfolane, tetrahydrofuran (THF), methylsulfolane, nitromethane, N,N-dimethylformamide, dimethyl sulfoxide, vinylene carbonate (VC), vinyl ethylene carbonate (EVC), fluoroethylene carbonate (FEC), and ethylene sulfite (ES) can be used. Particularly, a mixture of a cyclic carbonate such as EC and PC and a chain carbonate such as DMC, DEC, and EMC is preferably used. The mixture can be prepared at a mixing ratio such that the ratio of the cyclic carbonate is in a range of 10% to 90% by volume. Among these materials, VC, EVC, FEC, or ES is further preferably added to the mixture.

### [Working Examples]

Hereinafter, the present embodiments will be described in detail, based on working examples. However, the following working examples are merely exemplified, and the present invention is not limited to the following working examples.

### <Sample 1>

### (Manufacturing of Slurry 1 for Negative Electrode)

In accordance with the above-described "Step of Preparing Slurry for Negative Electrode", a slurry for a negative electrode was manufactured.

First, a binder (obtained by dissolving PI in NMP, 11 wt%) and hydrophobized CeNF (dispersed in water, solid-component concentration: 0.5 wt%, acid value: 76.5 mg/g) were mixed using Homodisper at a rotational speed of 1000 rpm. The hydrophobized CeNF dispersed in water and having an acid value of 76.5 mg/g was used. As for the addition amount of the hydrophobized CeNF, the addition amount of the water dispersion was prepared so that the ratio of a solid component (that is, a component serving as the negative electrode mixture) in a slurry 1 for a negative electrode was 0.5 wt%. The concentration of the hydrophobized CeNF contained in the water dispersion was 4 wt%. Note that the acid value is expressed as the number of mg of potassium hydrate required to neutralize acid components contained in 1 g of the sample, and the acid value can be prepared to be in a range of, for example, 30 to 300 mg/g.

Subsequently, graphite and nano-Si serving as the negative electrode active materials were introduced at a weight ratio of 9:1, and furthermore, a carbon nanotube (CNT) was added as the pther negative electrode active material, and then, these materials were mixed using Homodisper at a rotational speed of 3000 rpm for 24 minutes. The addition amounts of the graphite, the nano-Si, and the CNT were 78.3 wt%, 8.7 wt% and 2 wt%, respectively. After that, alcohol was added, and these materials were stirred for 1 minute to provide a slurry 1 for a negative electrode. Table 1 shows the addition amounts of the negative electrode materials.

In this case, note that carbon-coated nano-Si (having an average particle diameter of 45 nm and a coating thickness of 2 to 3 nm) was used as the nano-Si. The graphite having an average particle diameter of 22 um was used.

### (Manufacturing of Negative Electrode 1)

In accordance with the above-described "Step of Forming Negative Electrode", a negative electrode was manufactured. The above-described slurry 1 for the negative electrode was applied to a current collector while using a die coater, and these materials were dried in a drying furnace at 70°C. As the current collector, Ni-plated steel foil was used.

### (Manufacturing of Cell Battery 1)

The manufactured negative electrode 1, Li metal serving as the counter electrode, and glass fiber (separator) having a thickness of 100 um were assembled to manufacture a coin-type half-cell battery (Sample 1). As an electrolytic solution, 1 mol/L of LiPF₆ (EC:DEC = 1:1 Vol%, VC: 1 wt%) was used. The coin-type cell battery used Li metal for the positive electrode illustrated in FIG. 1 and FIG. 2, and was provided by putting a stacked body (also referred to as an electrode group) of the Li metal, the negative electrode, and the separator to be housed in a coin-shaped can, and introducing the electrolytic solution thereinto, and then, closing and sealing a lid. For example, the above-described stacked body was disposed so that the Li metal is in contact with the bottom of the can while the negative electrode is in contact with the back surface of the lid.

### <Sample 2>

### (Manufacturing of Slurry 2 for Negative Electrode)

A slurry 2 for a negative electrode was manufactured as similar to the case of the slurry 1 for the negative electrode, except that the amount of the binder (obtained by dissolving PI in NMP) in the slurry 1 for the negative electrode was changed from 11 wt% to 5 wt%, and the resultant difference was prepared so that the ratio of graphite to nano-Si was 9:1.

### (Manufacturing of Negative Electrode 2)

A negative electrode 2 was manufactured as similar to the case of the negative electrode 1.

### (Manufacturing of Cell Battery 2)

while using the manufactured negative electrode 2, a cell battery 2 was manufactured as similar to the case of the cell battery 1.

### <Sample 3>

### (Manufacturing of Slurry 3 for Negative Electrode)

A slurry 3 for a negative electrode was manufactured as similar to the case of the slurry 1 for the negative electrode, except that the ratio of graphite to nano-Si in the slurry 1 for the negative electrode was 8:2.

### (Manufacturing of Negative Electrode 3)

A negative electrode 3 was manufactured as similar to the case of the negative electrode 1.

### (Manufacturing of Cell Battery 3)

While using the manufactured negative electrode 3, a cell battery 3 was manufactured as similar to the case of the cell battery 1.

### <Sample 4>

### (Manufacturing of Slurry 4 for Negative Electrode)

A slurry 4 for a negative electrode was manufactured so that a water-based binder (here, obtained by dispersing SBR in water, 11 wt%) was used as the binder in the slurry 1 for the negative electrode, and the hydrophobized CeNF was not added. Note that the use of the water-based binder makes it difficult to add a large amount of nano-Si, and therefore, a part of the nano-Si was changed to SiO to manufacture the slurry 4 for the negative electrode. Specifically, the amount of the nano-Si was 4 wt%, the amount of the SiO was 8.5 wt%, the amount of the graphite was 81 wt%, and the amount of the acetylene black (AB) serving as the other negative electrode active material was 2 wt%. Air bubbles were observed in the slurry 4 for the negative electrode.

### (Manufacturing of Negative Electrode 4)

A negative electrode 4 was manufactured as similar to the case of the negative electrode 1.

### (Manufacturing of Cell Battery 4)

A cell battery 4 was manufactured as similar to the case of the cell battery 1 while using the manufactured negative electrode 4.

### <Sample 5>

### (Manufacturing of Slurry 5 for Negative Electrode)

A slurry 5 for a negative electrode was manufactured as similar to the case of the slurry 1 for the negative electrode, except that the amount of the binder (obtained by dissolving PI in NMP) in the slurry 1 for the negative electrode was changed from 11 wt% to 7 wt%, and the resultant difference was prepared so that the ratio of graphite to nano-Si was 9:1.

### (Manufacturing of Negative Electrode 5)

A negative electrode 5 was manufactured as similar to the case of the negative electrode 1.

### (Manufacturing of Cell Battery 5)

A cell battery 5 was manufactured as similar to the case of the cell battery 1 while using the manufactured negative electrode 5.

### <Sample 6>

### (Manufacturing of Slurry 5 for Negative Electrode)

A slurry 6 for a negative electrode was manufactured as similar to the case of the slurry 1 for the negative electrode, except that the amount of the binder (obtained by dissolving PI in NMP) in the slurry 1 for the negative electrode was changed from 11 wt% to 9 wt%, and the resultant difference was prepared so that the ratio of graphite to nano-Si was 9:1.

### (Manufacturing of Negative Electrode 6)

A negative electrode 6 was manufactured as similar to the case of the negative electrode 1.

### (Manufacturing of Cell Battery 6)

A cell battery 6 was manufactured as similar to the case of the cell battery 1 while using the manufactured negative electrode 6.

<Sample 7>

### (Manufacturing of Slurry 7 for Negative Electrode)

A slurry 7 for a negative electrode was manufactured as similar to the case of the slurry 1 for the negative electrode, except that the amount of the hydrophobized CeNF (dispersed in water, acid value: 76.5 mg/g) in the slurry 1 for the negative electrode was changed from 0.5 wt% to 0.3 wt%. Note that the amount of the hydrophobized CeNF was equal to or less than 1 wt%, and therefore, the hydrophobized CeNF was not counted in the solid components. However, the solid components containing the hydrophobized CeNF may be calculated at 100 wt%.

### (Manufacturing of Negative Electrode 7)

A negative electrode 7 was manufactured as similar to the case of the negative electrode 1.

### (Manufacturing of Cell Battery 7)

A cell battery 7 was manufactured as similar to the case of the cell battery 1 while using the manufactured negative electrode 7.

### <Sample 8>

### (Manufacturing of Slurry 8 for Negative Electrode)

A slurry 8 for a negative electrode was manufactured as similar to the case of the slurry 1 or 7 for the negative electrode, except that the amount of the hydrophobized CeNF (dispersed in water, acid value: 76.5 mg/g) in the slurry 1 for the negative electrode was changed from 0.5 wt% of to 0.25 wt% of the hydrophobized CeNF.

### (Manufacturing of Negative Electrode 8)

A negative electrode 8 was manufactured as similar to the case of the negative electrode 1.

### (Manufacturing of Cell Battery 8)

A cell battery 8 was manufactured as similar to the case of the cell battery 1 while using the manufactured negative electrode 8.

### <Sample 9>

### (Manufacturing of Slurry 9 for Negative Electrode)

A slurry 9 for a negative electrode was manufactured as similar to the case of the slurry 2 for the negative electrode, except that non-hydrophobized CeNF (also referred to as untreated CeNF) is used in place of the hydrophobized CeNF in the slurry 1 for the negative electrode.

### (Manufacturing of Negative Electrode 9)

A negative electrode 9 was manufactured as similar to the case of the negative electrode 1.

### (Manufacturing of Cell Battery 9)

A cell battery 9 was manufactured as similar to the case of the cell battery 1 while using the manufactured negative electrode 9.

### <Sample 10>

### (Manufacturing of Slurry 10 for Negative Electrode)

A slurry 10 for a negative electrode was manufactured as similar to the case of the slurry 2 for the negative electrode, except that the hydrophobized CeNF in the slurry 1 for the negative electrode was not added.

### (Manufacturing of Negative Electrode 10)

A negative electrode 10 was manufactured as similar to the case of the negative electrode 1.

### (Manufacturing of Cell Battery 10)

A cell battery 10 was manufactured as similar to the case of the cell battery 1 while using the manufactured negative electrode 10.

### <Sample 11>

### (Manufacturing of Slurry 11 for Negative Electrode)

A slurry 11 for a negative electrode was manufactured as similar to the case of the slurry 6 for the negative electrode, except that the ratio of graphite to nano-Si in the slurry 1 for the negative electrode was 8:2.

### (Manufacturing of Negative Electrode 11)

A negative electrode 11 was manufactured as similar to the case of the negative electrode 1.

### (Manufacturing of Cell Battery 11)

A cell battery 11 was manufactured as similar to the case of the cell battery 1 while using the manufactured negative electrode 11.

**[Table 1]**

| | Negative electrode | | | | | | | |
|---|---|---|---|---|---|---|---|---|
| | Graphite | Nano-Si | Conductive agent | | Hydrophobized CeNF | Binder | Current collector | Design current capacity |
| | | | AB | CNT | | | | |
| Sample 1 | 78.3 wt% | 8.7 wt% | 0 wt% | 2 wt% | 0.5 wt% | PI: 11 wt% | Ni-plated steel foil | 600 mAh/g |
| Sample 2 | 83.7 wt% | 9.3 wt% | 0 wt% | 2 wt% | 0.5 wt% | PI: 5 wt% | | |
| Sample 3 | 69.6 wt% | 17.4 wt% | 0 wt% | 2 wt% | 0.5 wt% | PI: 11 wt% | | 800 mAh/g |
| Sample 4 | 81 wt% | Nano-Si: 4 wt% | 2 wt% | 0 wt% | 0 wt% | Water-based SBR: 4% | Ni-plated steel foil | 500 mAh/g |
| | | SiO: 8.5 wt% | | | | | | |
| Sample 5 | 81.9 wt% | 9.1 wt% | 0 wt% | 2 wt% | 0.5 wt% | PI: 7 wt% | Ni-plated steel foil | 600 mAh/g |
| Sample 6 | 80.1 wt% | 8.9 wt% | | | | PI: 9 wt% | | |
| Sample 7 | 83.7 wt% | 9.3 wt% | | | 0.3 wt% | PI: 5 wt% | | |
| Sample 8 | | | | | 0.25 wt% | | | |
| Sample 9 | | | | | Untreated CeNF: 0.5 wt% | | | |
| Sample 10 | | | | | 0 wt% | | | |
| Sample 11 | 71.2 wt% | 17.8 wt% | | | 0.5 wt% | PI: 9 wt% | | 800 mAh/g |

### (Initial Characteristics)

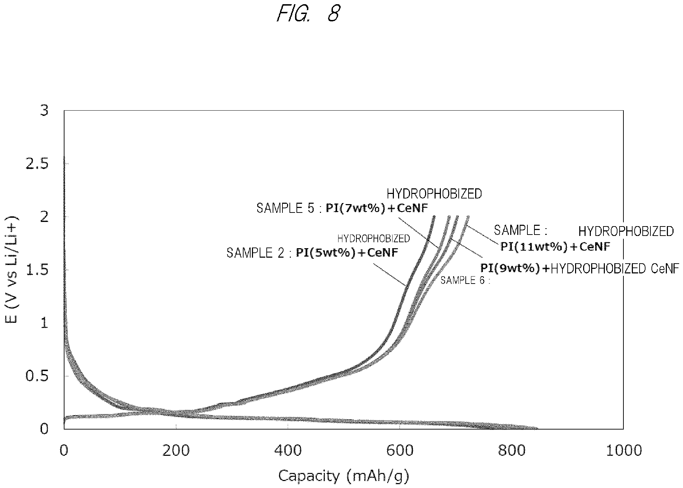

For the manufactured cell batteries, the initial characteristics of the coin-type cell batteries (samples 1, 2, 5, and 6) were examined at a constant current of 0.46 mA within a cell bhattery voltage range og 1 mV to 1V under an enviroment with a temperature of 30°C. FIG. 8 is a graph showing the initial characteristics of the coin-type cell batteries (samples 1, 2, 5, and 6). A horizontal axis shows a capacity (mAh/g), and a vertical axis shows a voltage (E, (V)).

As illustrated in FIG. 8, any of the samples exhibited good initial characteristics. Furthermore, it was found that the larger the addition amount of the binder (obtained by dissolving PI in NMP) was to be 5 wt% → 7 wt% → 9 wt% → 11 wt%, the larger the capacity was. Generally, when the amount of the binder is increased, the capacity tends to decrease. In contrast, in the above-described samples of the working examples, a tendency opposite to the above-described tendency was observed. Therefore, it can be considered that the combination use of the binder (obtained by dissolving PI in NMP) and the hydrophobized CeNF (dispersed in water) reduces the expansion and shrinkage of the nano-Si caused by charge and discharge, which results in improvement of the cell battery capacity. Note that FIG. 9 is a graph showing the initial characteristics of the cell battery 4 using the water-based solvent. In the cell battery 4 using the water-based binder, a lower cell battery capacity than those of the samples 1, 2, 5, and 6 was observed. In the cell battery 4, note that a part without any defect in the coating layer observed by visual check was used.

### (Cycle Characteristics)

For the manufactured cell batteries, the cycle characteristics of the coin-type cell batteries (samples 1, 2, 5, and 6) were examined at a constant current of 0.46 mA within a cell battery voltage range of 1 mV to 1V under an environment with a temperature of 30°C. FIG. 10 is a graph showing the cycle characteristics of the coin-type cell batteries (samples 1, 2, 5, and 6). A horizontal axis shows the number of cycles (Cycle number), and a vertical axis shows a discharge capacity (mAh/g).

As illustrated in FIG. 10, any of the samples (samples 1, 2, 5, and 6) exhibited a good discharge capacity even in increase in the number of cycles. Furthermore, any of the samples (samples 1, 2, 5, and 6) exhibited a better discharge capacity than that of the sample 10 without the addition of the CeNF. Furthermore, large difference in the cycle characteristics was not observed between the sample in which the addition amount of the binder (obtained by dissolving PI in NMP) was 5 wt% and the sample in which the addition amount of the binder was 7 wt%. However, the sample in which the addition amount of the binder was 11 wt% had better cycle characteristics than that of the sample in which the addition amount of the binder was 9 wt%, and the sample in which the addition amount of the binder was 11 wt% exhibited the most excellent cycle characteristics among the samples 1, 2, 5, 6, and 10. Here, the samples in all of which the addition amount of the hydrophobized CeNF was unified to be 0.5 wt% were compared with one another, and therefore, it is considered that a more effective cell battery can be provided, depending on the ratio of the binder (obtained by dissolving PI in NMP) to the hydrophobized CeNF.

FIG. 11 is a graph showing the cycle characteristics of the coin-type cell batteries (samples 2, 7, and 8) that are different from one another in the addition amount of the hydrophobized CeNF. A horizontal axis shows the number of cycles (cycle number) and a vertical axis shows discharge capacity (mAh/g).

As illustrated in FIG. 11, any of the samples exhibited a better discharge capacity than those of the sample 10 without the addition of the CeNF and the sample 9 using the untreated CeNF. Furthermore, the larger the addition amount of the hydrophobized CeNF was to be 0.25 wt% → 0.3 wt% → 0.5 wt%, the larger the capacity was, and the smaller the decrease amount in discharge capacity caused by the increase in the number of cycles was.

In the samples (samples 2, 7, and 8), the weight ratio of the nano-Si was 10%. On the other hand, the cycle characteristics of the samples 3 and 11 in each of which the weight ratio of nano-Si was 20% were examined.

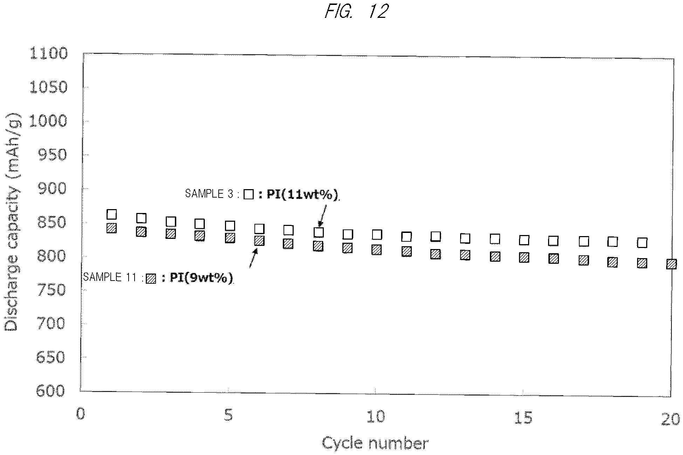

FIG. 12 is a graph showing the cycle characteristics of the coin-type cell batteries (samples 3 and 11) in which the ratio to the nano-Si was 8:2. A horizontal axis shows the number of cycles (cycle number), and a vertical axis shows discharge capacity (mAh/g).

As illustrated in FIG. 12, any of the samples exhibited a better discharge capacity than those of the sample 10 without the addition of the CeNF and the sample 9 using the untreated CeNF. Thus, the higher the ratio of the nano-Si was, the larger the improvement of the discharge capacity was. Furthermore, also in the samples 3 and 11, it was confirmed that the larger the addition amount of the binder (obtained by dissolving PI in NMP) was to be 9 wt% → 11 wt%, the larger the capacity was.

### (Discussion)

Based on the above-described working examples and other experiments performed by the inventors, better composition of the slurry for the negative electrode will be discussed below.

As the slurry for the negative electrode including nano-Si, the hydrophobized CeNF and the organic solvent-based binder are preferably used.

It was found that the addition amount of the hydrophobized CeNF is preferably equal to or more than 0.25 wt%, and it was found that even the addition amount of the hydrophobized CeNF in a range of 0.25 to 0.5 wt% also provides good results. The hydrophobized CeNF to be used may be dispersed in a water-based solvent. As described above, the nano-Si can react with water, the addition amount of the hydrophobized CeNF is smaller than, for example, the addition amount of the binder, and the amount of its solvent (a dispersion medium) is also smaller. Therefore, the water in the hydrophobized CeNF dispersed in the water does not adversely affect. The concentration of the hydrophobized CeNF in a water dispersion is, for example, 0.05 to 1 wt%. Its addition amount is approximately 0.05 to 1 ml with respect to 100 ml of the entire amount of the solvent in the slurry for the negative electrode, and is preferably equal to or lower than 1 wt% of the entire amount of the solvent in the slurry for the negative electrode.

The amount of the hydrophobized CeNF contained in the slurry for the negative electrode is preferably equal to or more than 0.01 wt%, and more preferably equal to or more than 0.02 wt% of the solid components (the total amount of the negative electrode active materials and the binder).

Good results were provided when the ratio of graphite to nano-Si in the slurry for the negative electrode was 9:1 to 8:2. Thus, it has been found that good results are provided even when the ratio of the nano-Si in the negative electrode active materials is 10 to 20 percent (8.7 to 17.8 wt% in the case of the above-described working examples).

Furthermore, it has been found that good results are provided even when the addition amount of the organic solvent-based binder is 5 to 11 wt% of the solid components (the negative electrode mixture) of the slurry for the negative electrode.

In all the above-described working examples, the slurry, the electrode, and the cell battery were formed in the atmosphere. Here, as described above, the water-based solvent may be used as long as the amount thereof is very small, and water in the atmosphere has not so much influence. Hence, the slurry, the electrode, and the cell battery according to the present embodiment do not need to be formed in a dry booth in which humidity and temperature are strictly controlled, but can be formed in the atmosphere, and therefore, the present invention is very useful.

### (Second Embodiment)

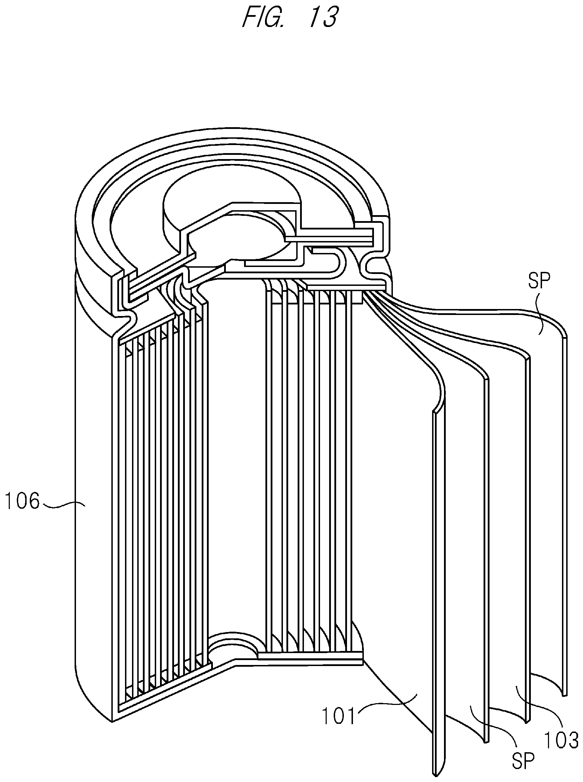

In the working example of the first embodiment, the coin-type cell battery was manufactured. However, there is no limitation on the applicable cell battery structure of the negative electrode described in the first embodiment, and the negative electrode can be used as, for example, a negative electrode of a cylindrical cell battery. FIG. 13 is a cross-sectional perspective view illustrating the configuration of the cylindrical lithium ion cell battery. The lithium ion cell battery illustrated in FIG. 13 includes a cylindrical can 106. The can 106 houses an electrode group in which a belt-shaped positive electrode 101 and a belt-shaped negative electrode 103 are rolled via a separator SP. For example, in the belt-shaped positive electrode 101 and the belt-shaped negative electrode 103, an electrode mixture layer is formed on both sides of a current collector. Furthermore, a positive electrode current collector tab at the upper end surface of the electrode group is joined to a positive electrode cap. A negative electrode current collector tab at the lower end surface of the electrode group is joined to the bottom of the can 106. Note that an insulating coating (not illustrated) is formed on the outer peripheral surface of the can 106. Furthermore, an electrolytic solution (not illustrated) is introduced into the can 106. Note that the cylindrical cell battery is exemplified herein. However, a square-shaped cell battery may be also applicable.

In the above-described working example, polyimide (PI) was used as the binder. However, another organic solvent-based binder may be also used. As the organic solvent-based binder, the above-described polyimide (PI) or polyvinylidene fluoride (PVdF) is preferably used from the viewpoint of the improvement of the adhesive properties of the nano-Si.

### (Third Embodiment)

In the first embodiment, the slurry for the negative electrode was prepared using a stirrer such as Homodisper. However, the slurry for the negative electrode may be prepared using an extruder.

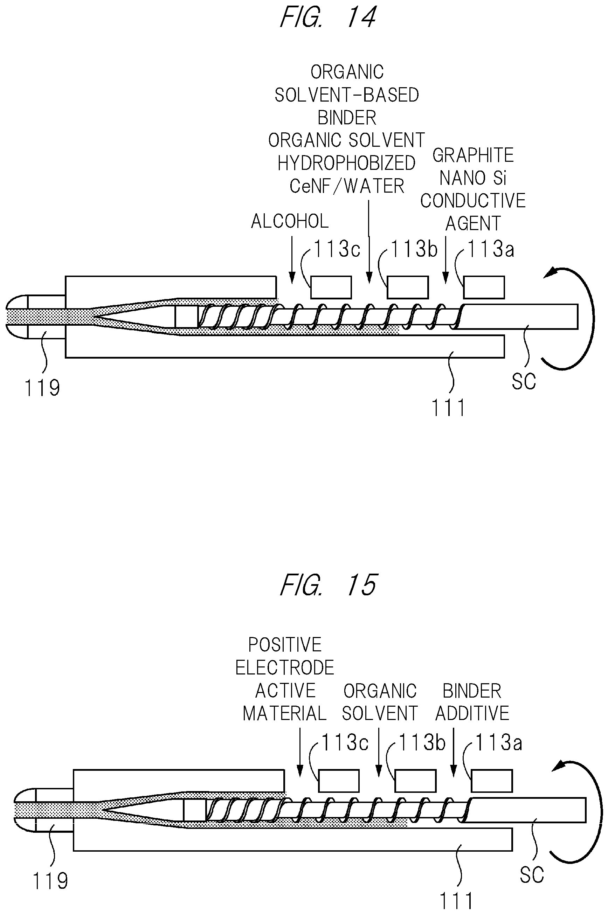

FIG. 14 is a cross-sectional diagram illustrating a method of preparing the slurry for the negative electrode by using an extruder. As illustrated in FIG. 14, the extruder includes a cylinder 111 and a screw SC disposed inside the cylinder 111. A not-illustrated actuator for the screw is connected to the screw SC. The cylinder 111 is provided with three supply ports 113a, 113b, 113c in this order from the upstream side of the cylinder 111. Furthermore, at an end of the cylinder 111, a discharge nozzle 119 is provided.

For example, the negative electrode active materials (for example, graphite, the nano-Si, and other negative electrode active materials) are added from the supply port 113a, and the organic solvent-based binder, the organic solvent, and the hydrophobized CeNF (dispersed in water) are added thereto from the supply port 113b while mixing is performed by the rotation of the screw SC. Subsequently, alcohol (a solvent for preparation) is added from the supply port 113c, and mixing is performed by the rotation of the screw SC. Thus, the slurry for the negative electrode is prepared, and is discharged from the discharge nozzle 119.

A slurry for a positive electrode can be also prepared using the same type extruder. FIG. 15 is a cross-sectional diagram illustrating a method of preparing the slurry for the positive electrode by using the extruder. For example, a binder and an additive are added from the supply port 113a, and an organic solvent (for example, NMP) is added thereto from the supply port 113b while mixing is performed by the rotation of the screw SC. Subsequently, a positive electrode active material is added from the supply port 113c, and mixing is performed by the rotation of the screw SC. Thus, the slurry for the positive electrode is prepared, and is discharged from the discharge nozzle 119.

### (Fourth Embodiment)

In the first embodiment, a water-based solvent (such as water and/or alcohol, here, water (H₂O)) is used as a dispersion solvent for hydrophobized CeNF. However, an organic solvent may be used. As described above, in order to prevent aggregation and enhance dispersibility into the slurry, the hydrophobized CeNF is preferably used in the state of being dispersed in a solvent. Here, a method of providing the hydrophobized CeNF dispersed in the organic solvent by substituting the water-based solvent in which the hydrophobized CeNF is dispersed with the organic solvent will be described.

### (Method of Preparing Hydrophobized CeNF Dispersed in Organic Solvent)

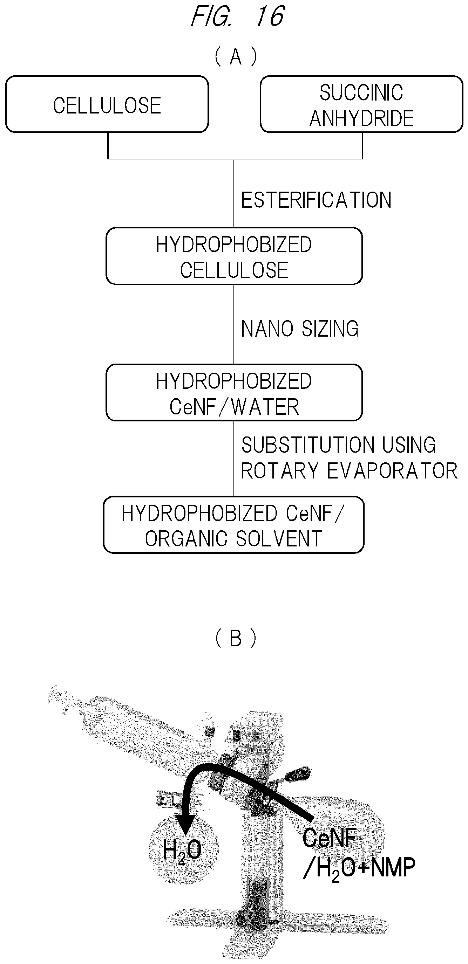

FIG. 16 is a diagram illustrating a step of preparing the hydrophobized CeNF dispersed in the organic solvent. This explanation will be made about a method of preparing the hydrophobized CeNF dispersed in NMP in which NMP is used as the organic solvent while succinic anhydride is used as a carboxylic acid compound that is a hydrophobizing agent.

As illustrated in FIG. 16 (A), (solid such as powder) cellulose and (solid such as tablet-shaped) succinic anhydride are mixed at 100°C or higher. For example, the mixing is performed using a pressure kneader at 125°C for 20 minutes. The weight ratio of the cellulose to the succinic anhydride is, for example, 90wt%:10wt%.

By the stirring in the above-described heating state, an esterification reaction is generated to form the hydrophobized cellulose. After that, these materials are rinsed with acetone or the like in order to remove the unreacted succinic anhydride.

Subsequently, the formed hydrophobized cellulose is dispersed in a water-based solvent (such as water and/or alcohol, here, water (H₂O)), and is subjected to micronization process (microfibrillation process, nanosizing). For example, process at 245 MPa and 10 Pass is performed to the cellulose to be nanosized by using a micronization apparatus (Starburst). The explanation up to here is in the same method of preparing the hydrophobized CeNF dispersed in the water-based solvent with reference to FIG. 3. Thus, the hydrophobized CeNF can be provided. The hydrophobized CeNF at this stage is in the state of being dispersed in the water-based solvent, and this water-based solvent is substituted with NMP (organic solvent). For example, as illustrated in FIG. 16(B), the water-based solvent (here, water (H₂O)) is gradually substituted with the organic solvent (here, NMP) by a rotary evaporator.

First, the organic solvent (for example, NMP) is added to the water-based solvent in which the hydrophobized CeNF is dispersed, to form a mixed solution. At this time, the mixed solution is prepared so that the hydrophobized CeNF (solid contents) is 0.1 to 20 wt% with respect to 100 wt% of the solvent. Such a process can provide the CeNF dispersed in the organic solvent (for example, NMP).

Subsequently, while the above-described mixed solution is stirred, the water-based solvent (here, water (H₂O)) is evaporated to be removed from the mixed solution, and thus, the concentration of the organic solvent (here, NMP) is increased.

In the foregoing, the present invention made by the present inventors has been concretely described, based on the embodiments and working examples. However, it is needless to say that the present invention is not limited to the foregoing embodiments or working examples, and various modifications can be made within the scope of the present invention.

### EXPLANATION OF REFERENCE CHARACTERS

- 1M: negative electrode mixture layer
- 1S: current collector
- 1T: negative electrode terminal
- 2M: positive electrode mixture layer
- 2S: current collector
- 2T: positive electrode terminal
- 20: coater unit
- 30: dryer unit
- 101: positive electrode
- 103: negative electrode
- 106: can
- 111: cylinder
- 113a: supply port
- 113b: supply port
- 113c: supply port
- 119: discharge nozzle
- B: valve
- D: slit die
- P: pump
- R: roll
- S: base substance
- SC: screw
- SL: slurry for negative electrode
- SP: separator
- T: coating liquid tank
- UW: unwinder
- WD: winder

## Claims

1. A negative electrode for a lithium ion cell battery comprising:
a negative electrode mixture including a negative electrode active material, a binder, and hydrophobized cellulose,
wherein the negative electrode active material includes Si particles,
the binder is an organic solvent-based binder, and
the hydrophobized cellulose results from substitution of a part of hydrophilic groups of cellulose by a hydrophobic group.

2. The negative electrode for the lithium ion cell battery according to claim 1,
wherein an average particle diameter of the Si particles is equal to or larger than 10 nm and equal to or smaller than 500 nm.

3. The negative electrode for the lithium ion cell battery according to claim 2,
wherein the organic solvent-based binder is polyimide or polyvinylidene fluoride.

4. The negative electrode for the lithium ion cell battery according to claim 3,
wherein the hydrophobized cellulose results from hydrophobization using a carboxylic acid-based compound.

5. The negative electrode for the lithium ion cell battery according to claim 4,
wherein a particle shape of the hydrophobized cellulose has a length that is equal to or larger than 3 nm and equal to or smaller than 10 µm, and an aspect ratio (length/diameter) that is equal to or larger than 0.01 and equal to or smaller than 10000.

6. A lithium ion cell battery comprising:
a negative electrode including a current collector and a negative electrode mixture layer formed on the current collector;
a positive electrode; and
an electrolytic solution,
wherein the negative electrode mixture layer includes a negative electrode active material, a binder, and hydrophobized cellulose,
the negative electrode active material includes Si particles,
the binder is an organic solvent-based binder, and
the hydrophobized cellulose results from substitution of a part of hydrophilic groups of cellulose by a hydrophobic group.

7. The lithium ion cell battery according to claim 6,
wherein an average particle diameter of the Si particles is equal to or larger than 10 nm and equal to or smaller than 500 nm.

8. The lithium ion cell battery according to claim 7,
wherein the organic solvent-based binder is polyimide or polyvinylidene fluoride.

9. The lithium ion cell battery according to claim 8,
wherein the hydrophobized cellulose results from hydrophobization using a carboxylic acid-based compound.

10. The lithium ion cell battery according to claim 9,
wherein a particle shape of the hydrophobized cellulose has a length that is equal to or larger than 3 nm and equal to or smaller than 10 um, and an aspect ratio (length/diameter) that is equal to or larger than 0.01 and equal to or smaller than 10000.

11. A method of manufacturing a negative electrode for a lithium ion cell battery, comprising steps of:
(a) forming a slurry for the negative electrode by mixing a negative electrode active material, a binder, and hydrophobized cellulose; and
(b) applying the slurry for the negative electrode onto a current collector,
wherein the negative electrode active material includes Si particles,
the binder is an organic solvent-based binder, and
the hydrophobized cellulose results from substitution of a part of hydrophilic groups of cellulose by a hydrophobic group.

12. The method of manufacturing the negative electrode for the lithium ion cell battery, according to claim 11,
wherein the step (b) includes steps of:
(b1) applying the slurry for the negative electrode onto a first surface of a base substance taken out from a feeding-out unit;
(b2) forming a negative electrode mixture layer on the first surface of the base substance by drying the slurry for the negative electrode on the base substance; and
(b3) taking the base substance including the negative electrode mixture layer formed thereon, into a feeding-in unit.

13. The method of manufacturing the negative electrode for the lithium ion cell battery, according to claim 12,
wherein an average particle diameter of the Si particles is equal to or larger than 10 nm and equal to or smaller than 500 nm.

14. The method of manufacturing the negative electrode for the lithium ion cell battery, according to claim 13,
wherein the organic solvent-based binder is polyimide or polyvinylidene fluoride.

15. The method of manufacturing the negative electrode for the lithium ion cell battery, according to claim 14,
wherein the hydrophobized cellulose results from hydrophobization using a carboxylic acid-based compound.

16. A method of manufacturing a lithium ion cell battery, comprising steps of:
(a) preparing a slurry for a negative electrode;
(b) applying the slurry for the negative electrode onto a current collector to form a negative electrode including the current collector and a negative electrode mixture layer;
(c) forming an electrode group in which the negative electrode and a positive electrode are stacked via a separator;
(d) housing the electrode group in a cell battery container; and
(e) after the step (d), introducing an electrolytic solution into the cell battery container,
wherein the step (a) is a step of forming the slurry for the negative electrode by mixing a negative electrode active material, a binder, and hydrophobized cellulose,
the negative electrode active material includes Si particles,
the binder is an organic solvent-based binder, and
the hydrophobized cellulose results from substitution of a part of hydrophilic groups of cellulose by a hydrophobic group.

17. The method of manufacturing the lithium ion cell battery, according to claim 16,
wherein the step (b) includes steps of:
(b1) applying the slurry for the negative electrode onto a first surface of a base substance taken out from a feeding-out unit;
(b2) forming the negative electrode mixture layer on the first surface of the base substance by drying the slurry for the negative electrode on the base substance; and
(b3) taking the base substance including the negative electrode mixture layer formed thereon, into a feeding-in unit.

18. The method of manufacturing the lithium ion cell battery, according to claim 17,
wherein an average particle diameter of the Si particles is equal to or larger than 10 nm and equal to or smaller than 500 nm.

19. The method of manufacturing the lithium ion cell battery, according to claim 18,
wherein the organic solvent-based binder is polyimide or polyvinylidene fluoride.

20. The method of manufacturing the lithium ion cell battery, according to claim 19,
wherein the hydrophobized cellulose results from hydrophobization using a carboxylic acid-based compound.
